# EUROPEAN PATENT SPECIFICATION

(11) **EP 3 368 180 B1**
(45) Date of publication and mention of the grant of the patent: **29.07.2020**
(21) Application number: 15805620.0
(22) Date of filing: 28.10.2015
(51) Int. Cl.: F24D 19/00, B01D 19/00, B01D 21/00, B01D 21/24

(54) **APPARATUS FOR SEPARATING EXTRANEOUS PARTICLES OF A FLUID IN A HYDRAULIC CIRCUIT**
VORRICHTUNG ZUM ABSCHEIDEN VON FREMDPARTIKELN EINES FLUIDS IN EINEM HYDRAULIKKREISLAUF
APPAREIL DE SÉPARATION DE PARTICULES ÉTRANGÈRES D'UN FLUIDE DANS UN CIRCUIT HYDRAULIQUE

(43) Date of publication of application: 05.09.2018
(73) Proprietor: CALEFFI S.p.A., 28010 Fontaneto d'Agogna, (Novara) (IT)
(72) Inventor: CALEFFI, Marco, I-28010 Fontaneto d'Agogna (Novara) (IT)
(74) Representative: Siniscalco, Fabio
(86) International application number: PCT/IB2015/058304
(87) International publication number: WO 2017/072554

(56) References cited:
- WO-A2-2012/165965
- DE-U- 6 801 723
- US-A- 1 623 437
- US-A- 2 446 587

## Description

### BACKGROUND OF THE INVENTION

The present invention relates to an apparatus for separating extraneous particles of a fluid in a hydraulic circuit.

### PRIOR ART

Apparatuses are known that are intended to be applied to hydraulic circuits and which perform the function of separating extraneous particles from fluid that flows in the circuit, for the correct operation of the circuit. The extraneous particles can be of solid and/or gaseous type.

One type of apparatus with these functions is the dirt separator, which separates impurities circulating in closed circuits of hydraulic systems, for example heating systems. The impurities are above all made up of particles of sand, sludge and ferrous dust.

The dirt separator normally comprises a large upper chamber in which an element with reticular surfaces is housed against which the particles collide and an equally large lower chamber in which the impurities are deposited. This lower chamber permits low cleaning frequencies and the impurities can be discharged therefrom to the outside.

Another type of apparatus with the aforesaid separating functions is the deaerator, which eliminates continuously the air particles that form in the closed circuits of hydraulic systems, for example, heating systems or solar plants.

Similarly to the dirt separator, the deaerator normally comprises a large lower chamber in which an element with reticular surfaces is housed to which the air microbubbles adhere and increase in volume and an upper chamber to which the air bubbles are directed and from which the air bubbles are discharged, for example through an automatic air vent valve.

Both the dirt separator and the deaerator are apparatuses that are widely used with excellent results in the hydraulic systems seen above.

There are, however, situations in which it is difficult if not impossible to install such apparatuses along the hydraulic circuits of the system due to problems of space in the systems, because of the configuration and the dimensions of such apparatuses.

### OBJECTS OF THE INVENTION

The object of the present invention is to propose an apparatus for separating extraneous particles of a fluid in a hydraulic circuit that is able to overcome the aforesaid drawbacks.

A further object of the present invention is that this separating apparatus should be low cost and highly efficient with minimal pressure drops.

### SHORT DESCRIPTION OF THE INVENTION

Such objects are achieved by a separating apparatus according to claim 1. WO2012/165965A2, US1623437A, US2446587A refer each to the preamble of claim 1

### SHORT DESCRIPTION OF THE DRAWINGS

In order to understand better the invention, a description is set out below of two exemplifying, non-limiting embodiments thereof, which are illustrated in the attached drawings, in which:
fig. 1 is a top perspective view of an apparatus for separating extraneous particles of a fluid in a hydraulic circuit, according to the invention;
fig.2 is an axial section view of the apparatus in fig.1;
fig.3 is a section according to the line 3-3 of fig.2 of a detail of the apparatus in fig.1;
fig. 4 is a top perspective cutaway view that shows the detail in fig.3;
fig.5 shows in an axial section the operation of the apparatus in fig.1;
fig.6 is a top perspective view of another apparatus for separating extraneous particles of a fluid in a hydraulic circuit;
fig.7 is a frontal view of a part of the apparatus in fig.6;
fig.8 is an axial section view of the apparatus in fig.6;
fig.9 is a perspective top view, in a partial axial section, of the apparatus in fig.6;
fig. 10 is a bottom perspective view, in an axial section, of the part of the apparatus in fig.7;
fig.11 shows in an axial section the operation of the apparatus in fig.6.

### DETAILED DESCRIPTION OF THE INVENTION

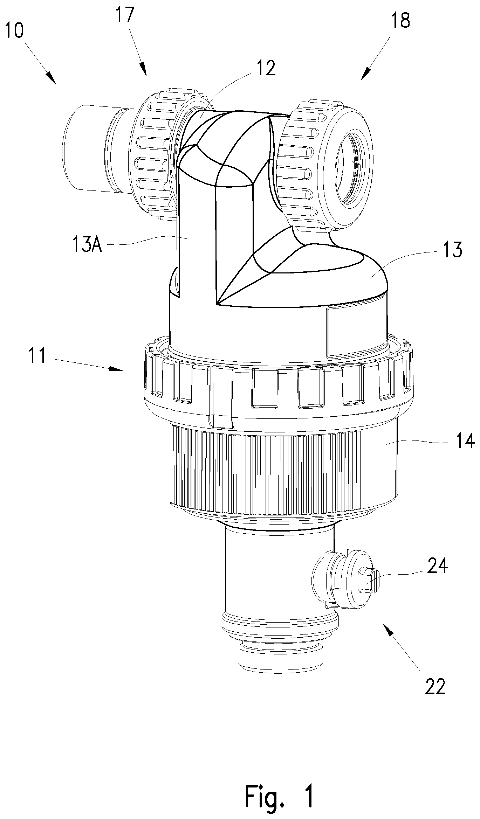

The apparatus illustrated in figs 1,2,5 in the operating configuration is a dirt separator, indicated generally with 10, to be installed in a hydraulic circuit, for example of a heating system.

This dirt separator 10 provides a body 11 formed by an upper tubular element 12, by a lower cup-shaped element 13 that joins with the upper tubular element 12, and by a further lower cup-shaped element 14 connected to the preceding lower cup-shaped element 13 by sealing screw coupling 15.

In the tubular element 12 a rectilinear conduit 16 is formed for the passage of fluid. At the two ends of the tubular element 12 two respective ring nut connections 17 and 18 are provided for connecting the dirt separator 10 to the hydraulic circuit of the heating system.

The two mutually connected lower cup-shaped elements 13, 14 define internally a collecting chamber 19 that communicates with the conduit 16. The joining between the tubular element 12 and the cup-shaped element 13 occurs through a narrowed portion 13A of the cup-shaped element 13 to which a narrowed portion 19A of the collecting chamber 19 corresponds internally.

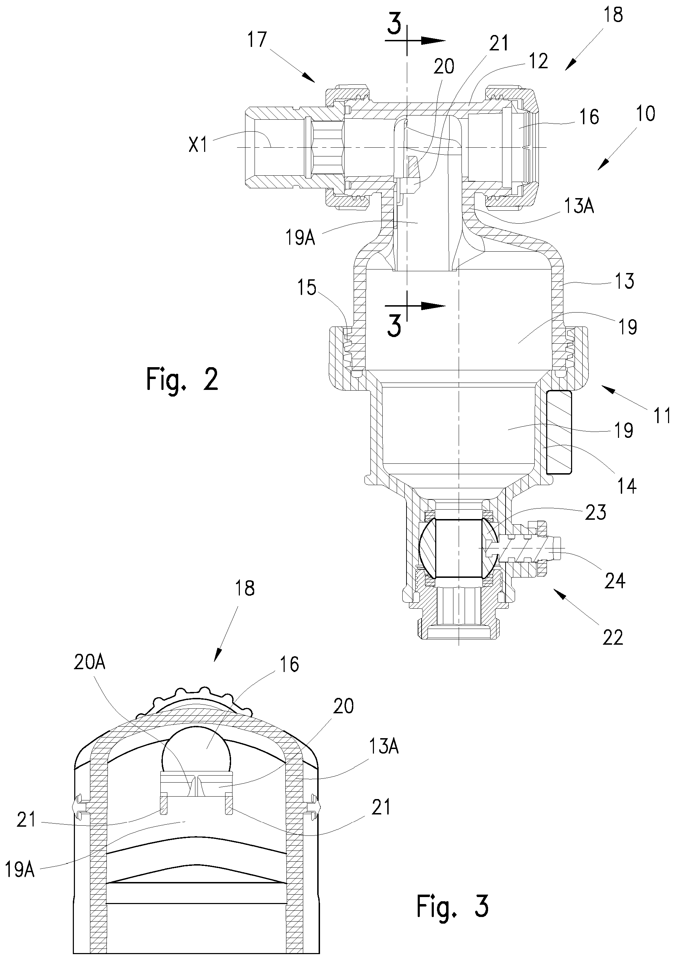

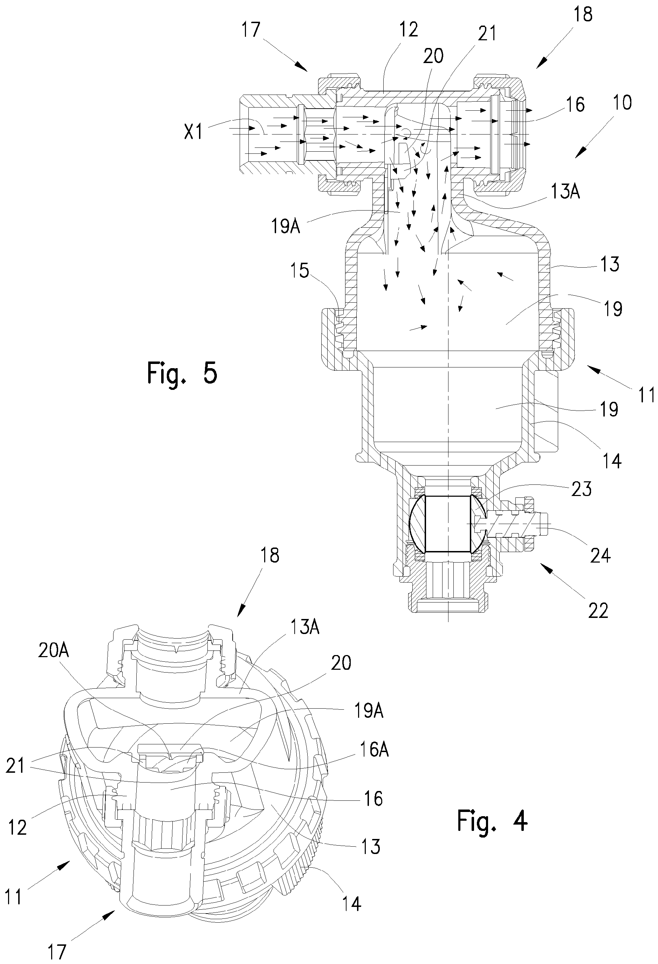

Along the periphery of the conduit 16, at the narrowed portion 19A of the collecting chamber 19, there is a deflecting flap 20, shown in detail in figs 3,4. The ends of the flap 20 are mounted on two shelves 21 fixed to the tubular element 12 so as to be arranged transversely to the axis X1 of the conduit 16, in the lower part of the conduit above the narrowed portion 19A of the collecting chamber 19. For this cantilevered arrangement of the flap 20 on the shelves 21, between the flap 20 and the lower edge of the conduit 16 a passage 16A forms for the fluid, which is clearly visible in fig.4. The flap 20 has a trapezoid section, in particular a right angle trapezium section, and has centrally a flow-breaking aerodynamic profile 20A in relief.

At the lower end of the cup-shaped element 14 a drain cock 22 is arranged that has a ball valve 23 connected to a control stem 24 that can be operated from the outside for opening or closing the drain cock 22. Opening the drain cock 22 places the collecting chamber 19 in communication with the outside.

The operation of the dirt separator 10 is illustrated in fig.5 with the help of arrows.

Once the dirt separator 10 has been connected to the hydraulic circuit of the heating system by means of the ring nut connections 17 and 18, the conduit 16 is traversed by the flow of fluid, for example water, of the heating system.

Inside the hydraulic circuit extraneous particles form, in particular particles of sand, sludge and ferrous dusts, which have to be removed from the hydraulic circuit.

The presence of an obstacle constituted by the deflecting flap 20 in the lower part of the conduit 16 induces a variation in the motion of the portion of fluid that hits the flap 20. In particular, this motion of the portion of fluid passes from laminar to turbulent; this turbulent motion is also promoted by the presence of the passage 16A and of the profile 20A of the flap 20. The frictional force acting on the particles thus undergoes a strong variation in direction and modulus and this frictional force, added to the force of gravity acting on the particles, will push the particles downwards in the direction of the collecting chamber 19 through the narrowed portion 19A.

As the weight of the particles tends to take the particles to the lower part of the conduit, with several passages of the fluid in the dirt separator 10, as normally occurs in the closed circuit of the heating systems, complete purification of the fluid will be obtained.

The particles that collect in the chamber 19 can be discharged to the outside by opening the drain cock 22.

The dirt separator 10 is very compact and can also be installed in systems in which the space available is not great, owing to the reduced dimensions in particular of the tubular element 16, which substantially has the configuration of a conduit. And also because of this conduit configuration of the element 16, it is easy to install the dirt separator 10 along the hydraulic circuit.

The dirt separator 10 is further of low cost and is highly efficient with minimal pressure drops.

The narrowed portion 19A of the chamber 19 promotes the collecting of the particles to be removed.

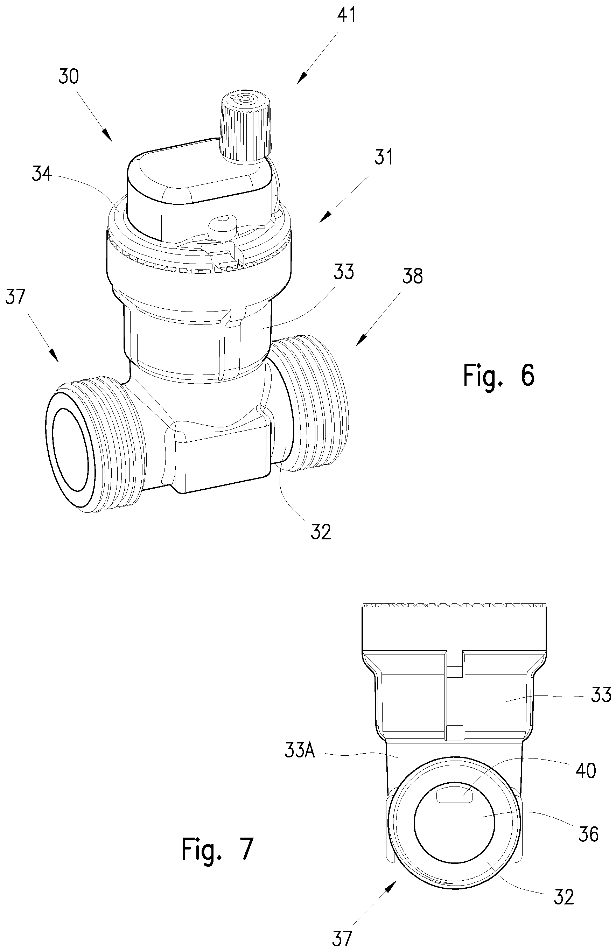

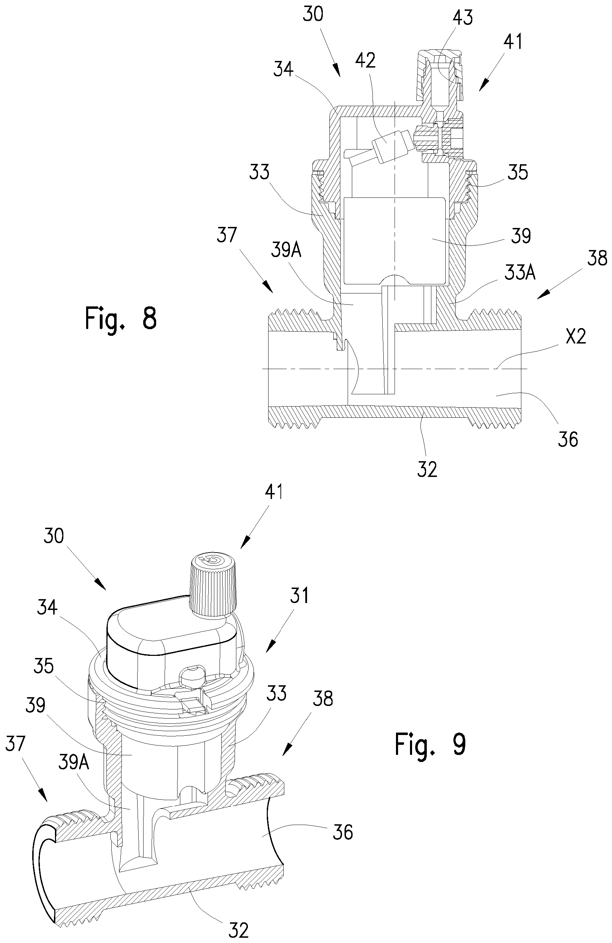

The apparatus illustrated in figs 6-11 in the operating configuration is on the other hand a deaerator, indicated generally with 30, which is also to be installed in a hydraulic circuit, for example of a heating system.

This deaerator 30 provides a body 31 formed by a lower tubular element 32, by an upper cup-shaped element 33 that joins with the lower tubular element 32, and by a further upper cup-shaped element 34 connected to the preceding upper cup-shaped element 33 by a seal screw coupling 35.

In the tubular element 32 a rectilinear conduit 36 is formed for the passage of fluid. At the two ends of the tubular element 32 two respective screw connections 37 and 38 are provided for connecting the deaerator 30 to the hydraulic circuit of the heating system.

The two mutually connected upper cup-shaped elements 33,34 define internally a collecting chamber 39 that communicates with the conduit 36. The joining between the tubular element 32 and the cup-shaped element 33 occurs through a narrowed portion 33A of the cup-shaped element 33 to which a narrowed portion 39A of the collecting chamber 39 corresponds internally.

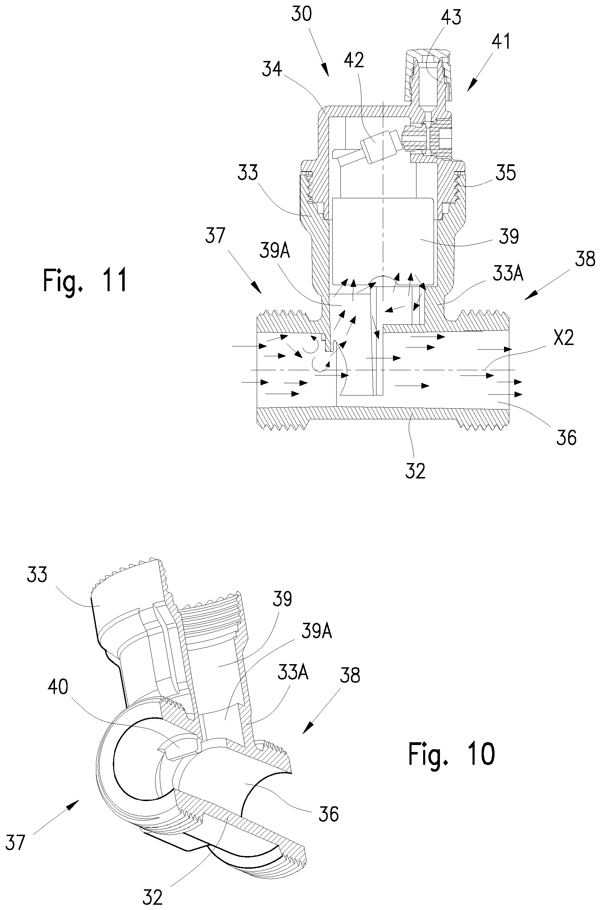

Along the periphery of the conduit 36, at the narrowed portion 39A of the collecting chamber 39, there is a deflecting flap 40, shown in detail in figs 7,10. The flap 40 is in a single piece with the tubular element 32 and extends therefrom so as to be arranged transversely to the axis X2 of the conduit 36, in the upper part of the conduit below the narrowed portion 39A of the collecting chamber 39. The flap 40 has a rectangular section.

In the cup-shaped element 34 an automatic air vent device 41 is housed that has a float 42 inside the cup-shaped element 34 and a relief valve 43 at the upper end of the cup-shaped element 34. The relief valve 43 is connected to the float 42 and is controlled by the latter to vent the air.

The operation of the deaerator 30 is illustrated in fig.11, with the help of arrows.

Once the deaerator 30 is connected to the hydraulic circuit of the heating system by means of the screw connections 37 and 38, the conduit 36 is traversed by the flow of fluid, for example water, of the heating system.

During the operation of the system inside the hydraulic circuit extraneous particles of air form that have to be removed.

The presence of an obstacle constituted by the deflecting flap 40 in the upper part of the conduit 36 induces a variation in the motion of the portion of fluid that hits the flap 40. In particular this motion of the portion of fluid passes from laminar to turbulent. The frictional force acting on the particles of air thus undergoes a great variation of direction and modulus and this frictional force, added to the hydrostatic thrust acting on the particles of air, will push the particles of air upwards in the direction of the collecting chamber 39 through the narrowed portion 39A.

As the particles of air, which are lighter than the fluid, tend to move to the upper part of the conduit, with several passages of the fluid in the deaerator 30, as normally occurs in the closed circuit of the heating systems, there will be a complete elimination of the air found in the hydraulic circuit.

Such particles of air are evacuated to the outside through the device 41, through the fact that with the accumulation of air in the upper part of the camera 39 the level of fluid in the chamber decreases and consequently the float 42 lowers that commands the valve 43 to open with consequent venting of the air to the outside.

As seen for the dirt separator 10, the deaerator 30 is very compact and can also be installed in systems in which the space available is not great, owing to the reduced dimensions in particular of the tubular element 36 which substantially has the configuration of a conduit. And also because of this conduit configuration of the element 36 it is easy to install the deaerator 30 along the hydraulic circuit.

The deaerator 30 is further of low cost and is highly efficient with minimal pressure drops.

The narrowed portion 39A of the chamber 39 promotes the collecting of the particles to be removed.

It is clear that variations on and/or additions to what has been disclosed and illustrated above are possible within the scope of the appended claims.

The general configuration of the dirt separator and of the deaerator and the particular configuration of the components thereof may vary according to requirements, the tubular configuration of the conduit remaining unchanged in which the deflecting flap is received and operates.

Also the configuration of the deflecting flap can vary, for example can have a different section from those illustrated. Further, several deflecting flaps can be provided that are arranged near the collecting chamber. In general, any deflecting element can be provided that performs equivalent functions to those of the flap.

However, the flap embodiments disclosed and illustrated above are very simple and effective.

Several deflecting elements and several collecting chambers can be used.

For the air vent, instead of using an automatic device, a manual device can be used.

In order to facilitate the agglomeration of the particles and improve efficiency, it is possible to insert suitable meshes into the collecting chamber.

In order to improve the capture of ferromagnetic dusts, it is possible to use suitable magnets near the collecting chamber.

The principle of the deflecting element seen above that creates turbulence and a consequent variation of the motion of the fluid can be applied to any apparatus for separating extraneous particles of a fluid in a hydraulic circuit.

A combined apparatus can also be conceived in the body of which a conduit and two collecting chambers are provided, one of which is arranged operationally in a lower position and the other of which is arranged in an upper position, at each of which at least one respective deflecting element is provided, such that both the solid particles below and the gaseous particles above can be intercepted and collected.

The invention is defined by the appended independent claims. Any information falling outside the scope of the claims is for explanation only.

## Claims

1. Apparatus (10) for separating extraneous particles of a fluid in a hydraulic circuit, comprising a body (11) wherein a conduit (16) is formed and at least one collecting chamber (19) communicating with the conduit (16) through a narrowed portion (19A) of the collecting chamber (19), wherein at the ends of the conduit (16) connecting means (17,18) is provided for connecting the conduit (16) to the hydraulic circuit, and wherein in the conduit (16) at least one deflecting element (20) is provided that is arranged along the periphery of the conduit (16) at the narrowed portion (19A) of the collecting chamber (19) and which creates a turbulence in the motion of the fluid to direct particles in the fluid to the collecting chamber (19), **characterised in that** the deflecting element comprises a flap (20) that extends for a portion of the periphery of the conduit (16) transversely to the axis (X1) of the conduit (16), wherein the flap (20) is mounted at its ends on two shelves (21) fixed to a tubular element (12) of conduit (16) in the lower part of the conduit above the narrowed portion (19A) of the collecting chamber (19) in a cantilevered manner in the conduit (16) to form between the edge of the portion of the periphery of the conduit (16) and the flap (20) a passage (16A) for the fluid, so as to induce a variation in the motion of the fluid from laminar motion to turbulent motion.

2. Apparatus according to claim 1, wherein the flap (20) extends in a rectilinear manner.

3. Apparatus according to claim 1 or 2, wherein the flap (20) has centrally a flow-breaking aerodynamic profile (20A) in relief.

4. Apparatus (10) according to any preceding claim, wherein the flap (20) has a trapezoid section.

5. Apparatus according to any preceding claim, acting as a dirt separator (10) wherein in operating conditions the conduit (16) is in an upper position and the collecting chamber (19) is in a lower position, and wherein at the lower end of the collecting chamber (19) a drain cock (22) is arranged for discharging to the outside the separated particles.

6. Apparatus according to any preceding claim, comprising two collecting chambers, one of which is arranged operationally in a lower position and the other in upper position, at each of which at least one respective deflecting element is provided, in such a manner that both solid extraneous particles below and gaseous extraneous particles above can be intercepted and collected.

## Patentansprüche

1. Vorrichtung (10) zum Abscheiden von Fremdpartikeln eines Fluids in einem Hydraulikkreislauf, umfassend einen Körper (11), in dem eine Leitung (16) gebildet ist, und mindestens eine Sammelkammer (19), die mit der Leitung (16) über einen verengten Abschnitt (19A) der Sammelkammer (19) in Verbindung steht, wobei an den Enden der Leitung (16) Verbindungsmittel (17, 18) bereitgestellt werden, um die Leitung (16) mit dem Hydraulikkreislauf zu verbinden, und wobei in der Leitung (16) mindestens ein Ablenkelement (20) bereitgestellt wird, das entlang der Peripherie der Leitung (16) in dem verengten Abschnitt (19A) der Sammelkammer (19) angeordnet ist, und das eine Turbulenz in der Bewegung des Fluids schafft, um Partikel in dem Fluid zu der Sammelkammer (19) zu leiten, **dadurch gekennzeichnet, dass** das Ablenkelement eine Klappe (20) umfasst, die sich über einen Abschnitt der Peripherie der Leitung (16) quer zur Achse (X1) der Leitung (16) erstreckt, wobei die Klappe (20) an ihren Enden auf zwei Vorsprüngen (21) montiert ist, die an einem röhrenförmigen Element (12) der Leitung (16) in dem unteren Teil der Leitung über dem verengten Abschnitt (19A) der Sammelkammer (19) überkragend in der Leitung (16) befestigt sind, um zwischen dem Rand des Abschnitts der Peripherie der Leitung (16) und der Klappe (20) einen Durchgang (16A) für das Fluid zu bilden, um eine Variation der Bewegung des Fluids von einer laminaren Bewegung auf eine turbulente Bewegung herbeizuführen.

2. Vorrichtung nach Anspruch 1, wobei sich die Klappe (20) geradlinig erstreckt.

3. Vorrichtung nach Anspruch 1 oder 2, wobei die Klappe (20) mittig ein strömungsbrechendes aerodynamisches Profil (20A) reliefartig aufweist.

4. Vorrichtung (10) nach einem der vorstehenden Ansprüche, wobei die Klappe (20) einen trapezförmigen Querschnitt aufweist.

5. Vorrichtung nach einem der vorstehenden Ansprüche, die als Schlammabscheider (10) dient, wobei sich im Betrieb die Leitung (16) in einer oberen Position und die Sammelkammer (19) in einer unteren Position befindet, und wobei an dem unteren Ende der Sammelkammer (19) ein Auslaufhahn (22) angeordnet ist, um die abgeschiedenen Partikel nach außen abzulassen.

6. Vorrichtung nach einem der vorstehenden Ansprüche, umfassend zwei Sammelkammern, von denen eine betriebsfähig in einer unteren Position und die andere in einer oberen Position angeordnet ist, in denen jeweils mindestens ein jeweiliges Ablenkelement bereitgestellt ist, so dass sowohl feste Fremdpartikel unterhalb als auch gasförmige Fremdpartikel oberhalb abgefangen und gesammelt werden können.

## Revendications

1. Appareil (10) pour séparer des particules étrangères d'un fluide dans un circuit hydraulique, comprenant un corps (11) dans lequel une conduite (16) est formée, et au moins une chambre de collecte (19) communiquant avec la conduite (16) à travers une partie rétrécie (19A) de la chambre de collecte (19), dans lequel, au niveau des extrémités de la conduite (16), des moyens de raccordement (17, 18) sont prévus pour raccorder la conduite (16) au circuit hydraulique et dans lequel, dans la conduite (16), au moins un élément déflecteur (20) est prévu qui est agencé le long de la périphérie de la conduite (16) au niveau de la partie rétrécie (19A) de la chambre de collecte (19) et qui crée une turbulence dans le mouvement du fluide pour diriger des particules dans le fluide jusqu'à la chambre de collecte (19), **caractérisé en ce que** l'élément déflecteur comprend un volet (20) qui s'étend pour une partie de la périphérie de la conduite (16) de manière transversale à l'axe (X1) de la conduite (16),
dans lequel le volet (20) est monté au niveau de ses extrémités sur deux étagères (21) fixées à un élément tubulaire (12) de la conduite (16) dans la partie inférieure de la conduite au-dessus de la partie rétrécie (19A) de la chambre de collecte (19) en porte-à-faux dans la conduite (16) pour former, entre le bord de la partie de la périphérie de la conduite (16) et le volet (20), un passage (16A) pour le fluide de sorte à induire une variation dans le mouvement du fluide passant d'un mouvement laminaire à un mouvement turbulent.

2. Appareil selon la revendication 1, dans lequel le volet (20) s'étend de manière rectiligne.

3. Appareil selon la revendication 1 ou 2, dans lequel le volet (20) présente au centre un profil aérodynamique de rupture d'écoulement (20A) en relief.

4. Appareil (10) selon l'une quelconque des revendications précédentes, dans lequel le volet (20) comporte une section trapézoïdale.

5. Appareil selon l'une quelconque des revendications précédentes, faisant office de séparateur de poussière (10), dans lequel, dans des conditions de fonctionnement, la conduite (16) est à une position supérieure et la chambre de collecte (19) est à une position inférieure, et dans lequel, au niveau de l'extrémité inférieure de la chambre de collecte (19), un robinet de purge (22) est agencé pour évacuer vers l'extérieur les particules séparées.

6. Appareil selon l'une quelconque des revendications précédentes, comprenant deux chambres de collecte, dont une est agencée de manière fonctionnelle à une position inférieure et l'autre à une position supérieure, au niveau de chacune desquelles au moins un élément déflecteur respectif est prévu de telle manière qu'à la fois des particules étrangères solides en dessous et des particules étrangères gazeuses au-dessous puissent être interceptées et collectées.
